# EUROPEAN PATENT APPLICATION

(11) **EP 4 513 333 A1**
(43) Date of publication of application: **26.02.2025**
(21) Application number: 23790956.9
(22) Date of filing: 17.03.2023
(51) Int. Cl.: G06F 9/50

(54) **MEMORY MANAGEMENT AND CONTROL METHOD AND APPARATUS, STORAGE MEDIUM AND ELECTRONIC DEVICE**

(30) Priority: 18.04.2022 CN 202210406838
(71) Applicant: Shenzhen TCL New Technology Co., Ltd., Shenzhen, Guangdong 518052 (CN)
(72) Inventor: LI, Xiang, Shenzhen, Guangdong 518052 (CN); DING, Jian, Shenzhen, Guangdong 518052 (CN)
(74) Representative: Murgitroyd & Company
(86) International application number: PCT/CN2023/082277
(87) International publication number: WO 2023/202295

(57) **Abstract**

A memory management and control method and apparatus, a storage medium and an electronic device, relating to the technical field of computers. The method comprises: when an online memory management and control condition is satisfied, acquiring memory management and control data (S310); sending the memory management and control data to a target online device, so that the target online device determines a memory management and control policy on the basis of the memory management and control data (S320); receiving the memory management and control policy sent by the target online device (S330); and performing memory management and control according to the memory management and control policy (S340). The method can improve the memory management and control efficiency and management and control reliability of a device.

## Description

### TECHNICAL FIELD

The present application relates to the field of computer technologies, and in particular to a memory management and control method, a device, a storage medium, and an electronic device.

### BACKGROUND TECHNOLOGY

Various devices usually need to perform memory management and control, such as memory cleaning or memory allocation. Currently, when various devices perform the memory management and control, the devices themselves usually analyze a control strategy according to their own conditions and then perform the management and control.

### SUMMARY OF INVENTION

### Technical Problem

Under the current method, when the memory management and control is performed through a single device, an analysis efficiency of the device's own control strategy is prone to low or analysis failure, resulting in low memory management and control efficiency and poor control reliability.

### Technical Solutions

Embodiments of the present application provide a solution that can improve memory management and control efficiency and management reliability of a device.

The embodiments of the present application provide the following technical solutions:

According to one embodiment of the present application, a memory management and control method includes: acquiring memory management and control data when determining that an online memory management and control condition is satisfied; sending the memory management and control data to a target online device, so that the target online device determines a memory management and control strategy based on the memory management and control data; receiving the memory management and control strategy sent by the target online device; performing a memory management and control according to the memory management and control strategy.

In some embodiments of the present application, before acquiring the memory management and control data of a local when determining that the online memory management and control condition is satisfied, the method further includes: acquiring target device data; determining whether an analysis and processing pressure is greater than a predetermined condition based on the target device data; if the analysis and processing pressure is greater than the predetermined condition, determining that the online memory management and control condition is satisfied.

In some embodiments of the present application, the target device data includes at least one of a local available memory value and a processor occupancy value; the determining whether the analysis and processing pressure is greater than the predetermined condition based on the target device data includes: if the available memory value is less than a first predetermined memory value or the processor occupancy value is greater than a first predetermined occupancy value, determining that the analysis and processing pressure is greater than the predetermined condition.

In some embodiments of the present application, the sending the memory management and control data to the target online device includes: acquiring processing performance information of each online device in one or more online devices; determining the target online device that satisfies an analysis and processing condition from the one or more online devices according to the processing performance information of each online device.

In some embodiments of the present application, the processing performance information includes at least one of an available memory value and a processor occupancy value, and the target online device is an online device having the available memory value greater than a second predetermined memory value or the processor occupancy value less than a second predetermined occupancy value.

According to one embodiment of the present application, a memory management and control method includes: receiving memory management and control data sent by a target device, where the memory management and control data is acquired by the target device when determining that an online memory management and control condition is satisfied; determining a memory management and control strategy based on the memory management and control data; sending the memory management and control strategy to the target device so that the target device performs a memory management and control according to the memory management and control strategy.

According to one embodiment of the present application, a memory management and control device includes: an acquisition module configured to acquire memory management and control data of a local if the local satisfies an online memory management and control scenario; a sending module configured to send the memory management and control data to a target online device, where the target online device analyzes a memory management and control strategy based on the memory management and control data; a receiving module configured to receive the memory management and control strategy sent by the target online device; a management and control module configured to perform a memory management and control according to the memory management and control strategy received by the receiving module.

According to one embodiment of the present application, a memory management and control device includes: a receiving module configured to receive memory management and control data sent by a target device, where the memory management and control data is acquired by the target device when determining that an online memory management and control condition is satisfied; a determination module configured to determine a memory management and control strategy based on the memory management and control data received by the receiving module; a sending module configured to send the memory management and control strategy determined by the determination module to the target device, so that the target device performs a memory management and control according to the memory management and control strategy.

According to another embodiment of the present application, a storage medium stores a computer program thereon, and when the computer program is executed by a processor of a computer, the computer executes the method described in the embodiments of the present application.

According to another embodiment of the present application, an electronic device may include: a memory storing a computer program; and a processor reading the computer program stored in the memory to execute the method described in the embodiments of the present application.

### Beneficial Effects

In the embodiments of the present application, the memory management and control data is acquired when determining that the online memory management and control condition is satisfied; the memory management and control data is sent to the target online device, so that the target online device determines the memory management and control strategy based on the memory management and control data the memory management and control strategy sent by the target online device is received; the memory management and control is performed according to the memory management and control strategy.

In this way, when the electronic device determines that the online memory management and control condition is satisfied, the memory management and control data is sent to the target online device. By using the target online device to analyze and process the memory cleaning strategy, the memory management and control strategy can be acquired online to perform the memory management and control locally on the electronic device. This can prevent a problem of low analysis efficiency or analysis failure of the device's own control strategy when the device is performing memory management and control on a single machine, thereby improving the device's memory management and control efficiency and control reliability.

### BRIEF DESCRIPTION OF THE DRAWINGS

In order to more clearly illustrate technical solutions in the embodiments of the present application, accompanying drawings that will be described in the embodiments are briefly introduced. It is obvious that the drawings described below are merely some embodiments of the present application, those skilled in the art can obtain other drawings according to these drawings without creative efforts.
FIG. 1 shows a schematic diagram of a structure of an electronic device;
FIG. 2 shows a schematic diagram of a system architecture of an embodiment of the present application;
FIG. 3 shows a flowchart of a memory management and control method according to an embodiment of the present application;
FIG. 4 shows a block diagram of a memory management and control method according to another embodiment of the present application;
FIG. 5 shows a block diagram of a memory management and control device according to an embodiment of the present application;
FIG. 6 shows a block diagram of a memory management and control device according to another embodiment of the present application.

### DETAILED DESCRIPTION OF THE EMBODIMENTS

The following clearly and completely describes the technical solutions in the embodiments of the present application with reference to the accompanying drawings in the embodiments of the present application. Apparently, the described embodiments are merely some of the embodiments of the present application rather than all of the embodiments. All other embodiments obtained by a person of ordinary skill in the art based on the embodiments of the present application without creative efforts shall fall within the protection scope of the present application.

In descriptions of the embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: only A exists, both A and B exist, and only B exists. In addition, in the descriptions in the embodiments of this application, "a plurality of' means two or more than two.

Terms "first" and "second" mentioned below are merely intended for description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of' means two or more.

At present, memory management is based on a single electronic device, and a task of clearing memory is performed by a system of the single electronic device. Taking a TV as an example, since a data processing capability of a TV system is far less than that of a mobile phone, an internal computing speed is often low. Therefore, it is particularly important to improve a speed at which the TV system calculates required data before clearing memory.

For example, in general life scenarios, when a TV system has a large number of background applications and processes occupying memory, it will affect a normal operation of the system. A single TV system cannot complete tasks such as processing data and calculating required memory in a certain period of time. Alternatively, when the TV system is running applications or processes with high CPU usage, it will not be able to use additional resources to complete the task of processing data before memory cleaning.

An embodiment of the present application provides a memory management and control method. Through the memory management and control method, when an electronic device satisfies an online memory management and control condition, local memory management and control data of the electronic device can be sent to a target online device. The target online device is configured to analyze and process a memory cleaning strategy, so as to acquire the memory management and control strategy online for memory management and control. This can prevent a problem of low analysis efficiency or analysis failure of the device's own control strategy when the device is performing memory management and control alone, thereby improving the memory management and control efficiency and control reliability of the device.

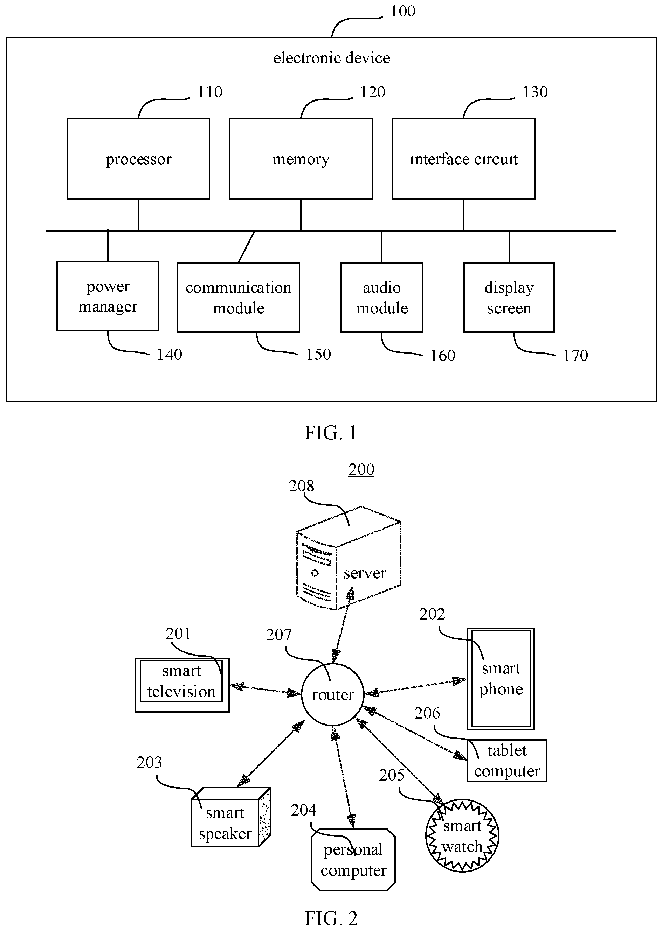

FIG. 1 shows a schematic diagram of a structural of an electronic device 100.

An embodiment is described in detail below by taking an electronic device 100 as an example. It should be understood that the electronic device 100 shown in FIG. 1 is only an example and does not constitute a specific limitation on the electronic device 100. In addition, the electronic device 100 may have more or fewer components than those shown in FIG. 1, may combine two or more components, or may have different component configurations. The various components shown in the figure may be implemented in hardware, software, or a combination of hardware and software, including one or more signal processing and/or application specific integrated circuits.

The electronic device 100 may include: a processor 110, a memory 110, an interface circuit 130, a power manager 140, a communication module 150, an audio module 160, a display screen 170, etc. The processor 110 may be coupled to the memory 110, the interface circuit 130, the power manager 140, the communication module 150, the audio module 160, the display screen 170, etc. Specifically, they may be connected via at least one bus or other interface. It is understood that the interface circuit 130 may be an input/output interface that may be configured to connect the electronic device to other devices, such as other chips, circuit boards, external memories, peripherals, or sensors, etc.

The processor 110 may include one or more processing units, for example: the processor 110 may include an application processor (AP), a modem processor, a graphics processor (graphics processing unit, GPU), an image signal processor (ISP), a controller, a memory, a video codec, a digital signal processor (DSP), a baseband processor, and/or a neural network processor (neural-network processing unit, NPU), etc. Different processing units may be independent devices or integrated into one or more processors. The controller may be a nerve center and a command center of the electronic device 100. The controller may generate an operation control signal based on instruction operation code and a time sequence signal, to complete control of instruction reading and instruction execution.

The memory 110 may be configured to store computer-executable program code. The executable program code includes instructions. The processor 110 executes various function applications and data processing of the electronic device 100 by running the instructions stored in the memory 110. The memory 110 may include a program storage area and a data storage area. The program storage area may store an operating system, an application required by at least one function (such as a sound playing function or an image playing function), and the like. The data storage area may store data (for example, audio data and a phone book) and the like created during use of the electronic device 100. In addition, the memory 110 may include a high-speed random access memory, and may further include a nonvolatile memory such as at least one magnetic disk storage device, a flash memory, or a universal flash storage (universal flash storage, UFS).

The power manager 140 provides power supply voltages required by the processor 110, the memory 110, and the interface circuit 130 for working, and may further provide clocks required by the processor 110, the memory 110, and the interface circuit 130 for working. Alternatively, the power manager 140 may convert energy from a battery or energy from a wall-mounted power supply into voltages required by the processor 110, the memory 110, and the interface circuit 130 for working. Alternatively, the power manager 140 may generate, by using a basic clock, for example, a crystal oscillator clock, the clocks required by the processor 110, the memory 110, and the interface circuit 130 for working. This is not limited in this embodiment. Alternatively, the power manager 140 includes a power management chip, and the power management chip includes circuits such as a voltage generator and a clock generator.

The communication module 150 is configured to realize an external communication function of the electronic device, including but not limited to wired communication and wireless communication. The wireless communication includes wireless local area networks (WLAN) (such as wireless fidelity (Wi-Fi) network), bluetooth (BT), global navigation satellite system (GNSS), frequency modulation (FM), near field communication technology (NFC), infrared technology (IR), cellular wireless communication and other wireless communication solutions that can be applied to the electronic device 100. The communication module 150 can be one or more devices integrating at least one communication processing module. The communication module 150 receives an electromagnetic wave through an antenna, performs frequency modulation and filtering processing on an electromagnetic wave signal, and sends a processed signal to the processor 110. The communication module 150 may further receive a to-be-sent signal from the processor 110, perform frequency modulation and amplification on the signal, and convert a processed signal into an electromagnetic wave for radiation through the antenna. In some optional embodiments, a Bluetooth (BT) module and WLAN module included in the communication module 150 can transmit signals to detect or scan devices near the electronic device 100, so that the electronic device 100 can use wireless communication technologies such as Bluetooth or WLAN to discover nearby devices, establish wireless communication connections with nearby devices, and share data with nearby devices through the above connection. Among them, the Bluetooth (BT) module can provide solutions including one or more Bluetooth communications in classic Bluetooth (Bluetooth 2.1) or Bluetooth low energy (Bluetooth lowenergy, BLE). The WLAN module can provide solutions including one or more WLAN communications in Wi-Fi direct, Wi-Fi LAN or Wi-Fi softAP. In some optional embodiments, the wireless communication solution provided by the communication module 150 can enable the electronic device to communicate with devices in the network (such as servers), and the WLAN wireless communication solution provided by the wireless communication module can also enable the electronic device to communicate with devices in the network (such as servers), and can communicate with cloud devices through the devices in the network (such as servers). In this way, the electronic device can discover cloud devices and transmit data to cloud devices.

The electronic device 100 can implement an audio function such as music playback or recording by using the audio module 160. The audio module 160 is configured to convert digital audio information into an analog audio signal for output, and is also configured to convert an analog audio input into a digital audio signal. The audio module 160 may be further configured to: code and decode an audio signal. In some embodiments, the audio module 160 may be disposed in the processor 110, or some function modules in the audio module 160 are disposed in the processor 110.

The electronic device 100 can realize the display function through a GPU, the display screen 170 and/or an application processor. The GPU is a microprocessor for image processing, which connects the display screen 170 and the application processor. The GPU is configured to perform mathematical and geometric calculations for graphics rendering. The processor 110 may include one or more GPUs, which execute program instructions to generate or change display information.

The display screen 170 is configured to display images, videos, etc. The display screen 170 includes a display panel. The display panel may be a liquid crystal display screen (LCD), an organic light-emitting diode (OLED), an active-matrix organic light-emitting diode or an active-matrix organic light-emitting diode (AMOLED), a flexible light-emitting diode (FLED), a Mini LED, a Micro LED, a Micro-OLED, a quantum dot light-emitting diode (QLED), etc. In some embodiments, the electronic device 100 may include 1 or N display screens 170, where N is a positive integer greater than 1.

The following introduces a system architecture provided by embodiments of the present application.

As shown in FIG. 2, which shows a schematic diagram of a system architecture 200 in an embodiment of the present application. The system architecture 200 includes a plurality of electronic devices, and the number of the plurality of electronic devices is at least 2. For example, the plurality of electronic devices may include a smart television 201 and a smart phone 202. Alternatively, in addition to the smart television 201 and the smart phone 202, the plurality of electronic devices may also include a smart speaker 203, a personal computer 204, a smart watch 205, a tablet computer 206, etc. Alternatively, at least two of the plurality of electronic devices may be of the same type, for example, both are smart phones, and the embodiments of the present application do not impose any restrictions on this. Each electronic device may communicate with each other. The plurality of electronic devices may be connected to a local area network (LAN) by wired or wireless fidelity (WiFi) connection; or may communicate via a mobile network or the Internet.

For example, when an environment in which the system architecture 200 is located is a home environment, multiple electronic devices can be located in the same local area network. As shown in FIG. 2, the system architecture 200 can also include a router 207. The router 207 can be set as an access point (AP) to provide a signal source for the network. Furthermore, each electronic device in the system architecture 200 can be connected to the router 207 as a station (STA). The router 207 can communicate with each electronic device through a wired network or a wireless network. Exemplarily, a Wi-Fi link is established between each electronic device through a wireless fidelity (Wi-Fi) protocol to achieve communication between devices. The specific implementation can be that each electronic device establishes a peer-to-peer (P2P) connection (or Wi-Fi Direct) or each accesses the same router 207 to achieve communication between devices.

Alternatively, the devices may also use a Bluetooth protocol to establish a Bluetooth link, and the communication between the devices may be achieved based on the Bluetooth link. Alternatively, the electronic devices may be interconnected via a cellular network. Alternatively, the electronic devices may be interconnected via a switching device (e.g., a USB data cable or a Dock device) to achieve the communication function between the electronic devices, and the embodiments of the present application are not limited to this.

In a possible implementation, there may be a central device between multiple electronic devices, such as a smart television 201. A Wi-Fi P2P GO (Group Owner) is created on the central device, and other devices are connected to the GO as P2P GCs (Group Clients). In this way, these devices form a one-to-many network and can communicate with each other.

In a possible implementation, the system architecture may further include a server 208. The server 208 may be a server of application software installed on an electronic device (such as a smart television 201), and connected to the electronic device (such as a smart television 201) via a network. The number of servers 208 is not limited to one, and may be multiple, which is not limited here.

In the embodiments of the present application, an electronic device that needs to perform memory management and control may be referred to as a target device, and a device that is connected to and can communicate with the target device may be referred to as an online device. Among online devices, a device that satisfies a analysis and processing condition and can assist the target device in determining a memory management and control strategy may be referred to as a target online device. Taking the target device as a smart television 201 as an example, the smart television 201 is interconnected and communicates with online devices such as a smart phone 202, a smart speaker 203, a personal computer 204, a smart watch 205, or a tablet computer 206. When the smart television 201 determines that the online memory management and control condition is satisfied, it will acquire memory management and control data, and send the memory management and control data to the target online device, so that the target online device determines a memory management and control strategy based on the memory management and control data. The smart television 201 performs memory management and control based on the memory management and control strategy sent by the target online device.

In a possible implementation, when the devices in the system architecture 200 are connected to the same AP to form a local area network, the devices in the system architecture 200 are online devices to each other. A device in the system architecture 200 can discover all other online devices under the same AP. All online devices under the same AP (including a device in the system architecture 200 and other devices) complete networking. Exemplarily, the smart television 201, the smart phone 202, the smart speaker 203, the personal computer 204, the smart watch 205, and the tablet computer 206 are peripheral devices (nearby devices) to each other. The smart television 201 can obtain or record some information of the smart phone 202, the smart speaker 203, the personal computer 204, the smart watch 205, and the tablet computer 206, such as device information. Alternatively, the information obtained or recorded in the smart television 201 will not be lost due to network disconnection. Furthermore, alternatively, it will not be lost within a preset time period, such as within one month.

In a possible implementation, an electronic device in in the system architecture 200 finds that, in other online devices in a local area network of a same AP, an account that is logged in on one or more other devices is an account of the electronic device, or an account that is logged in on one or more other devices is an associated account of an account that is logged in on the electronic device. In this case, another device on which the account or the associated account is logged in is a device trusted by the electronic device, or all devices on which the account or the associated account is logged in are trusted devices of each other. The devices on which the account or the associated account is logged in and that are connected to the same AP complete networking, and trusted devices can obtain information about each other. This ensures information security and privacy.

In some embodiments, when each electronic device in the system architecture 200 communicates through a mobile network or the Internet, it can be found through the mobile network or the Internet that the accounts logged in by some devices in the system architecture 200 are the same account or associated accounts. In addition, when the part of the devices is located near the user, the part of the devices completes networking, and the part of the devices is a mutually trusted device. The trusted devices can obtain some information of each other, such as device information, etc., which can ensure the security and privacy of the information. The associated account can be an account authorized by the same account.

The structure of any electronic device in the system architecture 200 may refer to the electronic device 100 shown in FIG. 1, and will not be described in detail herein.

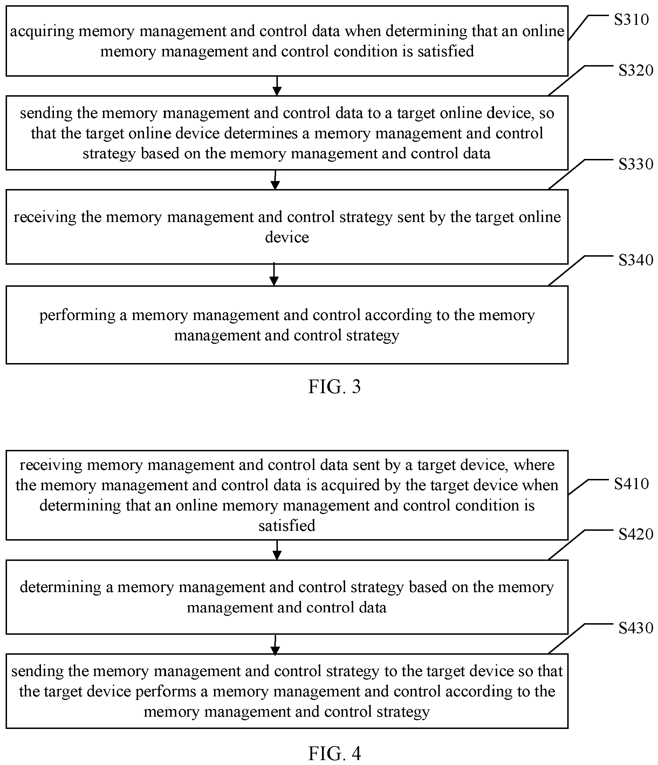

Based on the above system architecture, a memory management and control method in this application will be introduced by taking the electronic device as a smart television as an example, as shown in FIG. 3.

FIG. 3 schematically shows a flowchart of a memory management and control method according to an embodiment of the present application. An execution subject of the memory management and control method can be any electronic device in the above system architecture, such as the smart television 201.

As shown in FIG. 3, the memory management and control method may include steps S310 to S340.
Step S310, acquiring memory management and control data when determining that an online memory management and control condition is satisfied;
Step S320, sending the memory management and control data to a target online device, so that the target online device determines a memory management and control strategy based on the memory management and control data;
Step S330, receiving the memory management and control strategy sent by the target online device;
Step S340, performing a memory management and control according to the memory management and control strategy.

The online memory management and control condition may be a predetermined condition requiring online memory management and control. The memory management and control data refers to data required for the memory management and control, such as a local available memory value, information about processes occupying memory, and data about processes to use memory. When the electronic device determines that the online memory management and control condition is satisfied, it may acquire the memory management and control data.

After acquiring the memory management and control data, the electronic device sends the memory management and control data to the target online device. The target online device can determine the memory cleaning strategy applicable to the electronic device based on the memory management and control data. That is, the electronic device uses the target online device to determine the memory cleaning strategy online. The target online device can determine the memory management and control strategy suitable for the electronic device based on the analysis of the memory management and control data, and send the memory management and control strategy to the electronic device.

After the electronic device receives the memory management and control strategy sent by the target online device, it can directly perform the memory management and control according to the memory management and control strategy.

In this way, based on the step S310 to step S340, when the electronic device satisfies the online memory management and control condition, the memory management and control data of a local of the electronic device is sent to the target online device. The target online device is configured to analyze and process the memory cleaning strategy, so as to acquire the memory management and control strategy online for the memory management and control. This can prevent the problem of low analysis efficiency or analysis failure of the device's own control strategy when the device is performing memory management and control on a single machine, thereby improving the device's memory management and control efficiency and control reliability.

The following describes the specific process of each step when performing the memory management and control.

In the step S310, when it is determined that the online memory management and control condition is satisfied, the memory management and control data of a local is acquired.

The online memory management and control condition may be a predetermined condition requiring online memory management and control. The memory management and control data refers to data required for the memory management and control, such as a local available memory value, information about processes occupying memory, and data about processes to use memory. When the electronic device determines that the online memory management and control condition is satisfied, it may acquire the memory management and control data.

In one embodiment, before acquiring the memory management and control data of the local when determining that the online memory management and control condition is satisfied, the method further includes: determining whether a control scenario set locally by a user on the electronic device is the online memory management and control condition; if so, the electronic device locally satisfies the online memory management and control condition; otherwise, if not, the electronic device locally does not satisfy the online memory management and control condition.

In one embodiment, before acquiring the memory management and control data of the local when determining that the online memory management and control condition is satisfied, the method further includes: if it is determined that the electronic device locally uses a specific process, determining that the local satisfies the online memory management and control condition.

In one embodiment, before acquiring the memory management and control data of the local when determining that the online memory management and control condition is satisfied, the method further includes: acquiring target device data; determining whether an analysis and processing pressure is greater than a predetermined condition based on the target device data; if the analysis and processing pressure is greater than the predetermined condition, determining that the online memory management and control condition is satisfied.

The analysis and processing pressure refers to a pressure for analysis and calculation. If the local analysis and processing pressure is greater than the predetermined condition, the local memory management and control strategy is under analysis pressure. At this time, it is determined that the local memory cleanup condition is satisfied, and the analysis can be performed online in the subsequent steps, so as to obtain the memory management and control strategy efficiently and reliably.

In one embodiment, the target device data includes at least one of an available memory value and a processor occupancy value. The determining whether the analysis and processing pressure is greater than the predetermined condition based on the target device data includes: if the available memory value is less than a first predetermined memory value or the processor occupancy value is greater than a first predetermined occupancy value, determining that the analysis and processing pressure is greater than the predetermined condition.

In one example, if the available memory value is less than the first predetermined memory value, it can be determined that the analysis and processing pressure is greater than the predetermined condition. In another example, if the processor occupancy value is greater than the first predetermined occupancy value, it can be determined that the analysis and processing pressure is greater than the predetermined condition. In another example, if the available memory value is less than the first predetermined memory value and the processor occupancy value is greater than the first predetermined occupancy value, it is determined that the local analysis and processing pressure is greater than the predetermined condition. The first predetermined memory value and the first predetermined occupancy value can be set according to actual needs.

In the step S320, the memory management and control data is sent to a target online device, so that the target online device determines a memory management and control strategy based on the memory management and control data.

The target online device can be a preset online device or a target online device selected from multiple preset online devices. The target online device can perform analysis and processing based on the memory management and control data, and can analyze and determine the memory required for current calculation of the electronic device, the target available memory, processes for which memory needs to be released, and the predicted memory requirement of the target application, so as to generate the memory management and control strategy.

In one embodiment, the sending the memory management and control data to the target online device includes: acquiring processing performance information from one or more online devices; and determining the target online device that satisfies the analysis and processing condition from the one or more online devices according to the processing performance information of each online device.

The processing performance information of each of the online devices may include the analyzed processing performance information configured to describe whether the device satisfies the analysis and processing condition, and may also include at least one of an available memory value and a processor occupancy value.

One or more online devices are preset, and the electronic device can determine a target online device that satisfies the analysis and processing condition from the one or more online devices according to the processing performance information, thereby improving the reliability of acquiring the target device that can perform analysis and processing and preventing failure in determining the target online device.

In one embodiment, the electronic device locally shares processing information with one or more of the online devices, and the processing information is configured to describe whether the device satisfies the analysis and processing condition.

One or more local devices and one or more online devices can determine in real time or periodically whether they satisfy the analysis and processing condition, and then generate processing information for describing whether the device satisfies the analysis and processing condition. For example, when the online device determines that its available memory value is greater than the predetermined memory value and the processor occupancy value is less than the predetermined occupancy value, it determines that it meets the analysis and processing condition. Also, the local shares the processing information configured to describe whether the device meets the analysis and processing condition with each online device. The local can directly determine the target online device that satisfies the analysis and processing condition efficiently and accurately based on the processing information.

In one embodiment, the processing performance information includes at least one of the available memory value and the processor occupancy value. The target online device is an online device whose available memory value is greater than a second predetermined memory value or whose processor occupancy value is less than a second predetermined occupancy value.

The electronic device can locally determine, based on at least one of the available memory value and the processor occupancy value of the acquired online device, an online device whose available memory value is greater than the second predetermined memory value or whose processor occupancy value is less than the second predetermined occupancy value as the target online device that satisfies the analysis and processing condition. The second predetermined memory value and the second predetermined occupancy value can be set according to actual needs.

In the step S330, the memory management and control strategy sent by the target online device is received.

The electronic device locally receives the memory management and control strategy sent by the target online device, so there is no need to perform analysis and processing locally on the electronic device.

In step S340, the memory management and control is performed according to the memory management and control strategy.

The memory management and control strategy can include the current memory required by the electronic device, the target available memory, processes for which memory needs to be released, and the predicted memory requirement of the target application. The electronic device can perform corresponding memory management and control operations based on different memory management and control strategies.

In one example, the memory management and control strategy includes a memory cleaning strategy. The memory management and control performed locally according to the memory management and control strategy includes: performing a local memory clean-up according to the memory cleaning strategy. The memory cleaning strategy may include processes for which memory needs to be released, etc., and then memory cleaning may be performed by releasing the memory occupied by the process. In one example, the memory management and control strategy includes a memory allocation strategy. The memory management and control performed locally according to the memory management and control strategy includes: performing a local memory allocation according to the memory allocation strategy. For example, a corresponding memory is allocated according to the predicted memory requirement of the target application, etc.

FIG. 4 schematically shows a flowchart of a memory management and control method according to another embodiment of the present application. An execution subject of the memory management and control method can be any electronic device in the above system architecture, such as the smart watch 205.

As shown in FIG. 4, the memory management and control method may includes steps S410 to S430.
Step S410, receiving memory management and control data sent by a target device, where the memory management and control data is acquired by the target device when determining that an online memory management and control condition is satisfied;
Step S420, determining a memory management and control strategy based on the memory management and control data;
Step S430, sending the memory management and control strategy to the target device so that the target device performs a memory management and control according to the memory management and control strategy.

The online memory management and control condition may be a predetermined condition requiring online memory management and control. The memory management and control data is data required for memory management and control, such as available memory value in the target device, information about processes occupying memory, and data about processes to use memory. When the target device determines that the online memory management and control condition is satisfied, it may acquire the memory management and control data.

After acquiring the memory management and control data, the target device sends the memory management and control data to a local. The local can determine the memory cleaning strategy applicable to the target device based on the memory management and control data, that is, the target device uses the local to determine the memory cleaning strategy online.

The local can determine the memory management and control strategy that is suitable for the target device based on the memory management and control data analysis, and send the memory management and control strategy to the target device. After the target device receives the memory management and control strategy sent by the local device, it can directly perform the memory management and control according to the memory management and control strategy.

In this way, based on the step S410 to the step S430, when the target device detects that it satisfies the online memory management and control condition, the memory management and control data in the target device is sent to the local. The local analyzes and determines the memory cleaning strategy, and then acquires the memory management and control strategy online to perform the memory management and control. This can prevent the problem of low analysis efficiency or analysis failure of the target device's own control strategy when the target device performs memory management and control alone, and improve the target device's memory management and control efficiency and control reliability.

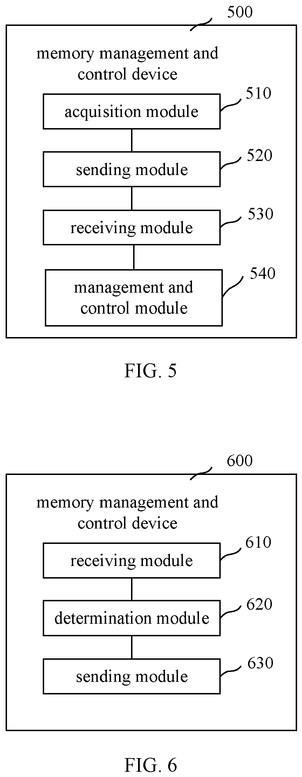

In order to facilitate better implementation of the memory management and control method provided in the embodiments of the present application, an embodiment of the present application also provides a memory management and control device based on the above-mentioned memory management and control method. The meanings of the terms are the same as those in the above-mentioned memory management and control method, and the specific implementation details can refer to the description in the method embodiment. FIG. 5 shows a block diagram of a memory management and control device according to an embodiment of the present application. FIG. 6 shows a block diagram of a memory management and control device according to another embodiment of the present application.

As shown in FIG. 5, a memory management and control device 500 may include an acquisition module 510, a sending module 520, a receiving module 530, and a management and control module 540.

The acquisition module 210 can be configured to acquire memory management and control data when it is determined that an online memory management and control condition is satisfied. The sending module 220 can be configured to send the memory management and control data to the target online device so that the target online device determines the memory management and control strategy based on the memory management and control data. The receiving module 230 can be configured to receive the memory management and control strategy sent by the target online device. The management and control module 240 can be configured to perform a memory management and control according to the memory management and control strategy.

In some embodiments of the present application, the device also includes: a data acquisition unit configured to acquire target device data; a pressure analysis unit configured to determine whether an analysis and processing pressure is greater than a predetermined condition based on the target device data; and a scenario determination unit configured to determine that the online memory management and control condition is satisfied if the analysis and processing pressure is greater than the predetermined condition.

In some embodiments of the present application, the target device data includes at least one of a local available memory value and a processor occupancy value. The pressure analysis unit is configured to: if the available memory value is less than a first predetermined memory value or the processor occupancy value is greater than a first predetermined occupancy value, determine that the local analysis and processing pressure is greater than the predetermined condition.

In some embodiments of the present application, the sending module 220 includes: a processing information acquisition unit configured to acquire processing performance information of each online device in one or more online devices; and a device selection unit configured to determine the target online device that satisfies an analysis and processing condition from the one or more online devices according to the processing performance information of each online device.

In some embodiments of the present application, the processing performance information includes at least one of an available memory value and a processor occupancy value. The target online device is an online device whose available memory value is greater than a second predetermined memory value or whose processor occupancy value is less than a second predetermined occupancy value.

As shown in FIG. 6, the memory management and control device 600 may include a receiving module 610, a determination module 620, and a sending module 630.

The receiving module 610 is configured to receive memory management and control data sent by a target device. The memory management and control data is acquired by the target device when determining that an online memory management and control condition is satisfied. The determination module 620 is configured to determine a memory management and control strategy based on the memory management and control data received by the receiving module. The sending module 630 is configured to send the memory management and control strategy determined by the determination module to the target device, so that the target device performs a memory management and control according to the memory management and control strategy.

It should be noted that, although several modules or units of the device for action execution are mentioned in the above detailed description, this division is not mandatory. In fact, according to the embodiments of the present application, the features and functions of two or more modules or units described above can be embodied in one module or unit. On the contrary, the features and functions of one module or unit described above can be further divided into being embodied by multiple modules or units.

In addition, the electronic device provided by the embodiments of the present application can be a terminal or a server. A processor 120 is a control center of the electronic device, and various interfaces and lines can be used to connect various parts of the entire electronic device. The processor 120 performs various functions of the electronic device and processes data by running or executing software programs and/or modules stored in a memory 110, and calling data stored in the memory 110, thereby monitoring the electronic device as a whole. Alternatively, the processor 120 may include one or more processing cores. Preferably, the processor 110 can integrate an application processor and a modem processor. The application processor mainly processes the operating system, user pages and application programs, etc., and the modem processor mainly processes wireless communications. It can be understood that the above-mentioned modem processor may not be integrated into the processor 120.

The memory 110 may be configured to store a software program and a module. The processor 110 executes various functional applications and data processing by running the software program and the module stored in the memory 110. The memory 110 may mainly include a program storage area and a data storage area. The program storage area may store an operating system, an application program (such as a sound playing function or an image playing function) that is required by at least one function, and the like; and the data storage area may store data that is created based on use of the computer device, and the like. In addition, the memory 110 may include a high-speed random access memory, and may further include a non-volatile memory, for example, at least one magnetic disk storage device, a flash memory, or another volatile solid-state storage device. Accordingly, the memory 110 may further include a memory controller to provide the processor 120 with access to the memory 110.

Specifically in this embodiment, the processor 120 in the electronic device will load the executable files corresponding to one or more computer program processes into the memory 120 according to the following instructions, and the processor 120 will run the computer program stored in the memory 110, thereby realizing the various functions in the aforementioned embodiments of the present application.

The processor 120 may execute the following steps: acquiring memory management and control data when determining that an online memory management and control condition is satisfied; sending the memory management and control data to a target online device, so that the target online device determines a memory management and control strategy based on the memory management and control data; receiving the memory management and control strategy sent by the target online device; performing a memory management and control according to the memory management and control strategy.

In some embodiments of the present application, before acquiring the memory management and control data of a local when determining that the online memory management and control condition is satisfied, the method further includes: acquiring target device data; determining whether an analysis and processing pressure is greater than a predetermined condition based on the target device data; if the analysis and processing pressure is greater than the predetermined condition, determining that the online memory management and control condition is satisfied.

In some embodiments of the present application, the target device data includes at least one of a local available memory value and a processor occupancy value; the determining whether the analysis and processing pressure is greater than the predetermined condition based on the target device data includes: if the available memory value is less than a first predetermined memory value or the processor occupancy value is greater than a first predetermined occupancy value, determining that the analysis and processing pressure is greater than the predetermined condition.

In some embodiments of the present application, the sending the memory management and control data to the target online device includes: acquiring processing performance information of each online device in one or more online devices; determining the target online device that satisfies an analysis and processing condition from the one or more online devices according to the processing performance information of each online device.

In some embodiments of the present application, the processing performance information includes at least one of an available memory value and a processor occupancy value, and the target online device is an online device having the available memory value greater than a second predetermined memory value or the processor occupancy value less than a second predetermined occupancy value.

The processor 120 may execute the following steps: receiving memory management and control data sent by a target device, where the memory management and control data is acquired by the target device when determining that an online memory management and control condition is satisfied; determining a memory management and control strategy based on the memory management and control data; sending the memory management and control strategy to the target device so that the target device performs a memory management and control according to the memory management and control strategy.

Those skilled in the art will appreciate that all or part of the steps in the various methods of the above embodiments may be accomplished by a computer program, or by controlling related hardware through a computer program. The computer program may be stored in a computer-readable storage medium and loaded and executed by a processor.

To this end, an embodiment of the present application further provides a storage medium in which a computer program is stored. The computer program can be loaded by a processor to execute the steps of any method provided by the embodiments of the present application.

The storage medium may include: a read-only memory (ROM), a random access memory (RAM), a magnetic disk or an optical disk, etc.

Since the computer program stored in the storage medium can execute the steps of any method provided in the embodiments of the present application, the beneficial effects that can be achieved by the method provided in the embodiments of the present application can be achieved. Please refer to the previous embodiments for details and will not be repeated here.

After considering the specification and practicing the disclosed embodiments, a person skilled in the art may easily conceive of other implementations of the disclosure. The disclosure is intended to cover any variations, uses, or adaptive changes of the disclosure following the general principles of the disclosure, and includes well-known knowledge and conventional technical means in the art and undisclosed in the disclosure.

It is to be understood that the disclosure is not limited to the precise structures described above and shown in the accompanying drawings, and various modifications and changes may be made without departing from the scope of the disclosure.

## Claims

1. A memory management and control method, comprising:
acquiring memory management and control data when determining that an online memory management and control condition is satisfied;
sending the memory management and control data to a target online device, so that the target online device determines a memory management and control strategy based on the memory management and control data;
receiving the memory management and control strategy sent by the target online device;
performing a memory management and control according to the memory management and control strategy.

2. The method according to claim 1, wherein before acquiring the memory management and control data of a local when determining that the online memory management and control condition is satisfied, the method further comprises:
acquiring target device data;
determining whether an analysis and processing pressure is greater than a predetermined condition based on the target device data;
if the analysis and processing pressure is greater than the predetermined condition, determining that the online memory management and control condition is satisfied.

3. The method according to claim 2, wherein the target device data comprises at least one of an available memory value and a processor occupancy value;
the determining whether the analysis and processing pressure is greater than the predetermined condition based on the target device data comprises:
if the available memory value is less than a first predetermined memory value or the processor occupancy value is greater than a first predetermined occupancy value, determining that the analysis and processing pressure is greater than the predetermined condition.

4. The method according to claim 1, wherein the sending the memory management and control data to the target online device comprises:
acquiring processing performance information of each online device in one or more online devices;
determining the target online device that satisfies an analysis and processing condition from the one or more online devices according to the processing performance information of each online device.

5. The method according to claim 4, wherein the processing performance information comprises at least one of an available memory value and a processor occupancy value, and the target online device is an online device having the available memory value greater than a second predetermined memory value or the processor occupancy value less than a second predetermined occupancy value.

6. The method according to claim 1, wherein a local shares processing information with one or more of online devices; and the sending the memory management and control data to the target online device comprises: determining the target online device that satisfies the analysis and processing condition according to the processing information.

7. The method according to claim 1, wherein the memory management and control strategy comprises a memory cleaning strategy; and the performing the memory management and control according to the memory management and control strategy comprises: performing a local memory clean-up according to the memory cleaning strategy.

8. The method according to claim 7, wherein the memory cleaning strategy comprises processes for which memory needs to be released, and the performing the local memory clean-up according to the memory cleaning strategy comprises: releasing memory occupied by the processes for which memory needs to be released.

9. The method according to claim 1, wherein the memory management and control strategy comprises a memory allocation strategy; and the performing the memory management and control according to the memory management and control strategy comprises: performing a local memory allocation according to the memory allocation strategy.

10. The method according to claim 9, wherein the memory allocation strategy comprises a predicted memory requirement of a target application, and the performing the local memory allocation according to the memory allocation strategy comprises: allocating corresponding memory according to the predicted memory requirement of the target application.

11. The method according to claim 1, wherein, before acquiring the memory management and control data when determining that the online memory management and control condition is satisfied, the method further comprises one of following methods:
determining whether a control scenario set by a user is the online memory management and control condition, if so, the online memory management and control condition is satisfied, otherwise, the online memory management and control condition is not satisfied;
determining that the online memory management and control condition is satisfied if a specific process is used.

12. A memory management and control method, comprising:
receiving memory management and control data sent by a target device, wherein the memory management and control data is acquired by the target device when determining that an online memory management and control condition is satisfied;
determining a memory management and control strategy based on the memory management and control data;
sending the memory management and control strategy to the target device so that the target device performs a memory management and control according to the memory management and control strategy.

13. The method according to claim 12, wherein the determining the memory management and control strategy based on the memory management and control data comprises:
determining at least one of a memory cleaning strategy and a memory allocation strategy based on the memory management and control data, wherein the memory management and control strategy comprises at least one of the memory cleaning strategy and the memory allocation strategy.

14. A memory management and control device, comprising:
an acquisition module configured to acquire memory management and control data when determining that an online memory management and control condition is satisfied;
a sending module configured to send the memory management and control data acquired by the acquisition module to a target online device, so that the target online device determines a memory management and control strategy based on the memory management and control data;
a receiving module configured to receive the memory management and control strategy sent by the target online device, wherein the memory management and control strategy is determined by the target online device based on the memory management and control data sent by the sending module;
a management and control module configured to perform a local memory management and control according to the memory management and control strategy received by the receiving module.

15. The device according to claim 14, wherein the device further comprises: a data acquisition unit configured to acquire target device data; a pressure analysis unit configured to determine whether an analysis and processing pressure is greater than a predetermined condition based on the target device data; and a scenario determination unit configured to determine that the online memory management and control condition is satisfied if the analysis and processing pressure is greater than the predetermined condition.

16. The device according to claim 15, wherein the target device data comprises at least one of a local available memory value and a processor occupancy value; and the pressure analysis unit is configured to determine that the local analysis and processing pressure is greater than the predetermined condition if the available memory value is less than a first predetermined memory value or the processor occupancy value is greater than a first predetermined occupancy value.

17. The device according to claim 14, wherein the sending module comprises: a processing information acquisition unit configured to acquire processing performance information of each online device in one or more online devices; and a device selection unit configured to determine the target online device that satisfies an analysis and processing condition from the one or more online devices according to the processing performance information of each online device.

18. A memory management and control device, comprising:
a receiving module configured to receive memory management and control data sent by a target device, wherein the memory management and control data is acquired by the target device when determining that an online memory management and control condition is satisfied;
a determination module configured to determine a memory management and control strategy based on the memory management and control data received by the receiving module;
a sending module configured to send the memory management and control strategy determined by the determination module to the target device, so that the target device performs a memory management and control according to the memory management and control strategy.
Claim 19. A storage medium storing a computer program, the computer program, when executed by a processor of a computer, causing the computer to perform the method according to any one of claims 1 to 11; or, the computer program, when executed by the processor of the computer, causing the computer to execute the method according to claims 12 to 13.
Claim 20. An electronic device comprises a memory storing a computer program; a processor reading the computer program stored in the memory to execute the method according to any one of claims 1 to 11; or the processor reading the computer program stored in the memory to execute the method according to claims 12 to 13.
